# EUROPÄISCHE PATENTANMELDUNG

(11) **EP 4 116 136 A1**
(43) Veröffentlichungstag der Anmeldung: **11.01.2023**
(21) Anmeldenummer: 22179622.0
(22) Anmeldetag: 17.06.2022
(51) Int. Cl.: B60L 50/15, B60L 50/40, H02M 3/335, H02M 3/337, H02M 3/158

(54) **HYBRIDES ELEKTRISCHES ENERGIESPEICHERSYSTEM**

(30) Priorität: 07.07.2021 DE 102021117484
(71) Anmelder: Westsächsische Hochschule Zwickau (University Of Applied Sciences), 08056 Zwickau (DE)
(72) Erfinder: Lehmann, Ringo, 08066 Zwickau (DE); Zacharias, Lutz, 09405 Gornau (DE); Bodach, Mirko, 09353 Oberlungwitz (DE); Slawinski, Sven, 08262 Muldenhammer OT Morgenröthe-Rautenkranz (DE); Mosig, Patrick, 08056 Zwickau (DE)
(74) Vertreter: Steiniger, Carmen

(57) **Zusammenfassung**

Die vorliegende Erfindung betrifft ein hybrides elektrisches Energiespeichersystem (1) mit einer Lasteinheit (2) oder einer Generatoreinheit, einem elektrochemischen Energiespeicher (3), dessen Pluspol mit der Lasteinheit (2) oder der Generatoreinheit verbunden ist, einem kapazitiven Energiespeicherstapel (4) und einer Spannungs- und Stromsteuerungs- und/oder -regeleinheit (5). Erfindungsgemäß weist das hybride elektrische Energiespeichersystem (1) ein aus dem kapazitiven Energiespeicherstapel (4) und einer Leistungselektronik bestehendes Energiespeichermodul (10) auf, wobei der kapazitive Energiespeicherstapel (4) eine Reihenschaltungsanordnung aus mehreren elektrischen Doppelschichtkondensatoren (40) ist und die Leistungselektronik eine Vollbrückenschaltung (65) und einen Gegentaktflusswandler (6) mit einem Übertragertransformator (60) mit einer mittig geteilten Sekundärwicklung (62) aufweist, wobei eine einzige Primärwicklung (61) des Übertragertransformators (60) im Gegentakt über Schalter (S1,S2,S3,S4) der Vollbrückenschaltung (65) mit dem Pluspol des kapazitiven Energiespeicherstapels (4) und mit Masse verbunden ist, und wobei eine Mittelanzapfung (64) der Sekundärwicklung (62) des Gegentaktflusswandlers (6) über eine Drosselspule (66) des Gegentaktflusswandlers (6) mit dem Pluspol der Lasteinheit (2) oder der Generatoreinheit verbunden ist, der Pluspol des kapazitiven Energiespeicherstapels (4) im Gegentakt mit den Wicklungsenden der Sekundärwicklung (62) des Übertragertransformators (60) verbunden ist und zwischen den Pluspol der Lasteinheit (2) oder der Generatoreinheit und den Pluspol des kapazitiven Energiespeicherstapels (4) ein Glättungskondensator (67) des Gegentaktflusswandlers (6) geschaltet ist.

## Beschreibung

Die vorliegende Erfindung betrifft ein hybrides elektrisches Energiespeichersystem mit einer Lasteinheit oder einer Generatoreinheit, einem elektrochemischen Energiespeicherstapel, dessen Pluspol mit der Lasteinheit oder der Generatoreinheit verbunden ist, einem kapazitiven Energiespeicherstapel und einer Spannungs- und Stromsteuerungs- und/oder -regeleinheit.

Aus dem Stand der Technik sind hybride Energiespeichersysteme bekannt, bei denen verschiedene Speichertechnologien vorteilhaft miteinander kombiniert werden. Durch eine Kombination chemischer, thermischer, mechanischer und/oder elektrischer Energiespeicher können hybride Energiespeichersysteme geschaffen werden, die optimal an die Eigenschaften und Anforderungen des zu speisenden Systems, in welches sie integriert werden sollen, angepasst sind.

Von besonderer Bedeutung sind hierbei hybride, elektrische Energiespeicher, in denen elektrische Energie gespeichert und von welchen elektrische Energie abgegriffen wird. Ein solcher Speicher verfügt in der Regel über einen elektrochemischen Energiespeicher in Form einer Batterie. Diese zeichnet sich durch eine hohe Speicherkapazität aus. Allerdings ist der maximal zulässige Be- und Entladestrom, der bei einer Batterie auch auf längere Zeit zum Einsatz kommen kann, limitiert. Bei Anwendungen, bei denen die Batterieleistung einen zeitlich sehr dynamischen Verlauf zeigt und die Batterie wiederholt schädlichen Leistungsspitzen eines angeschlossenen Generators und/oder Verbrauchers ausgesetzt ist, ist es sinnvoll, den batteriebasierten Energiespeicher durch ein zusätzliches Speichermedium zu unterstützen.

Beispielsweise lassen sich Leistungsschwankungen durch ein Schwungrad kompensieren. Das Schwungrad bildet einen kinetischen Energiespeicher, der batterieschädliche Lastanteile abfängt und dadurch die Lebensdauer eines elektrochemischen Langzeitspeichers maximiert.

Ein weiterer Ansatz für einen hybriden Energiespeicher besteht in einer Kombination von elektrochemischen Batteriespeichern, wie Hochleistungs- Vanadium-Redox-Flow-Batterien, mit elektrostatischen Doppelschichtkondensatoren, sogenannten Superkondensatoren bzw. Super-Caps. Bei Spannungen über 30 V wird die Nutzung von einfachen Superkondensatoren zusätzlich zu einer Batterie zur Unterstützung dynamischer Belastungen zunehmend ökonomisch ineffizient. Da die Zellspannung von Superkondensatoren bisher bei maximal 3 V liegt, müssen daher bei hohen Spannungen Superkondensatoren gestapelt werden, d. h. in Reihe geschaltet werden, um eine Anwendung technisch zu realisieren.

Werden Supercap-Stacks, also in Reihe geschaltete Stapel aus Doppelschichtkondensatoren (EDLC), als zusätzliche Energiespeicher zu Batterien eingesetzt, können mit diesen im Vergleich zu herkömmlichen Kondensatoren sehr hohe Energiemengen gespeichert und auch schnell wieder abgegeben werden. So können aus solchen Supercap-Stacks und Batterien aufgebaute hybride Energiespeichersysteme beispielsweise dazu genutzt werden, Energieverbrauchsspitzen elektrischer Maschinen, wie beispielsweise von Elektrofahrzeugen, schnell zur Verfügung zu stellen oder auch rekuperierte Energie der dann als Generator wirkenden elektrischen Maschine geeignet zu speichern.

Problematisch ist jedoch, dass die in Supercap-Stacks gespeicherte Energie durchschnittlich nur zu 80 % effektiv genutzt werden kann. Zusätzlich steigen mit zunehmender Anzahl von Superkondensatoren auch die Kosten des Supercap-Stacks, was wiederum den Kosten-Nutzen-Faktor des Gesamtgerätes in Frage stellen kann.

Um die Anzahl der nötigen Superkondensatoren möglichst gering zu halten, wurde bisher mit einer niedrigen Quellspannung bzw. Batteriespannung und einem nachgeschalteten Hochsetzsteller gearbeitet. Hier steigt mit zunehmender Batteriespannung jedoch auch die Anzahl der in Reihe zu schaltenden Superkondensatoren und im Hinblick auf den Hochsetzsteller sinkt ab 70 % Tastverhältnis dessen Wirkungsgrad aufgrund seiner Nichtlinearität. Für die praktische Umsetzung bedeutet dies, dass die Mindestspannung des Supercap-Stacks nicht signifikant größer oder kleiner als die Batteriespannung sein darf. Im ungünstigsten Fall ist in den Superkondensatoren ein zusätzlich hoher Energieinhalt vorhanden, welcher ohnehin schon nicht vollständig genutzt werden kann.

Ein entsprechendes, aus dem Stand der Technik bekanntes Energiespeichersystem weist eine Parallelschaltung aus einem Doppelschichtkondensatorstapel und einem Hochsetzsteller auf, dessen Ausgangsspannung jeweils der kompletten Amplitude der Batteriespannung zur Versorgung der jeweiligen Last entspricht. Bei dieser Schaltung liefert die Batterie zum Teil auch dynamische Anteile zum Laststrom parallel zu dem Doppelschichtkondensatorstapel. Da sich, wie oben bereits erwähnt, Doppelschichtkondensatorstapel aus physikalischen Gründen nie vollständig, sondern typischerweise bis auf ca. 20 % entladen, bleiben diese ca. 20 % stets ungenutzt. Die bekannte Schaltung ist daher hinsichtlich ihrer Topologie ineffizient.

Aus der Druckschrift DE 10 2016 122 383 A1 ist zudem ein hybrides Energiespeichersystem mit einem ersten Energiespeicher, wie einem Doppelschichtkondensator, und einem zweiten Energiespeicher, wie einer Batterie, bekannt, wobei die Energiespeicher mittels einer Steuerungsschaltung untereinander und/oder mit einer externen Energiequelle und/oder -senke elektrische Energie austauschen. Über einen von der Steuerungsschaltung angesteuerten Hochsetzsteller und/oder Tiefsetzsteller wird der jeweilige Energiebedarf oder -überschuss der jeweiligen Energiequelle und/oder -senke mittels der beiden Energiespeicher ausgeglichen. Zwischen den beiden Energiespeichern ist ein Brückenschalter vorgesehen, durch die eine zu starke Entladung des ersten Energiespeichers vermieden wird. Die eingesetzte Schaltung und die zugehörige Steuerungsschaltung sorgen dafür, dass die beiden Energiespeicher jeweils in ihrem Komfortbereich betrieben werden.

Darüber hinaus gibt es hybride Energiespeichersysteme, die neben einer Batterie einen Gegentaktflusswandler mit parallel geschaltetem Doppelschichtkondensatorstapel nutzen. Der Doppelschichtkondensatorstapel kann, wie bereits erläutert, nur bis zu ca. 20 % entladen werden. Es muss aber trotzdem die volle Ausgangsspannung für die Last bereit gestellt werden, da sonst kein Strom durch die Last mehr fließt. Diese volle Ausgangsspannung liefert hier der Gegentaktflusswandler. Bei Schaltungsvarianten mit Gegentaktflusswandler ist deren Wandler-Topologie energieeffizienter als bei Nutzung eines Hochsetzstellers. Allerdings gilt auch hier, dass mit steigender zu unterstützender Batteriespannung mehr Superkondensatoren in Reihe geschaltet werden müssen.

Der Gegentaktflusswandler wird bei der bekannten Schaltung technisch sinnlos, je niedriger die Spannung über dem Doppelschichtkondensator ist. Wenn der Doppelschichtkondensatorstapel unter 20 % entladen ist, fallen solch hohe Spannungen über den Bauelementen des Gegentaktflusswandlers und des Doppelschichtkondensatorstapels ab, d. h. die ohmschen Anteile der kapazitiven Energiespeicherschaltung werden so hoch, dass es nicht effizient ist, weitere Energie aus dem Doppelschichtkondensatorstapel zu entnehmen. Das heißt, wenn der Doppelschichtkondensatorstapel unter 20 % entladen ist, verliert er seine Funktionalität. Die entsprechende Regelschaltung stellt daher in diesem Fall typischerweise die Stromversorgung der Last nur durch die Batterie her.

Es ist daher die Aufgabe der vorliegenden Erfindung, ein Energiespeichersystem zur Verfügung zu stellen, welches einen Doppelschichtkondensatorstapel und einen elektrochemischen Energiespeicher aufweist und bei dem darüber hinaus die gesamte in dem Doppelschichtkondensatorstapel gespeicherte Energie effektiv nutzbar ist.

Diese Aufgabe wird durch ein hybrides elektrisches Energiespeichersystem mit einer Lasteinheit oder einer Generatoreinheit, einem elektrochemischen Energiespeicher, dessen Pluspol mit der Lasteinheit oder der Generatoreinheit verbunden ist, einem kapazitiven Energiespeicherstapel und einer Spannungs- und Stromsteuerungs- und/oder -regeleinheit gelöst, wobei das hybride elektrische Energiespeichersystem ein aus dem kapazitiven Energiespeicherstapel und einer Leistungselektronik bestehendes Energiespeichermodul aufweist, wobei der kapazitive Energiespeicherstapel eine Reihenschaltungsanordnung aus mehreren elektrischen Doppelschichtkondensatoren ist und die Leistungselektronik eine Vollbrückenschaltung und einen Gegentaktflusswandler mit einem Übertragertransformator mit einer mittig geteilten Sekundärwicklung aufweist, wobei eine einzige Primärwicklung des Übertragertransformators im Gegentakt über Schalter der Vollbrückenschaltung mit dem Pluspol des kapazitiven Energiespeicherstapels bzw. mit Masse verbunden ist, und wobei eine Mittelanzapfung der Sekundärwicklung des Gegentaktflusswandlers über eine Drosselspule des Gegentaktflusswandlers mit dem Pluspol der Lasteinheit oder der Generatoreinheit verbunden ist, der Pluspol des kapazitiven Energiespeicherstapels im Gegentakt mit den Wicklungsenden der Sekundärwicklung des Übertragertransformators verbunden ist bzw. zwischen den Pluspol der Lasteinheit oder der Generatoreinheit und den Pluspol des kapazitiven Energiespeicherstapels ein Glättungskondensator des Gegentaktflusswandlers geschaltet ist.

Das erfindungsgemäße hybride Energiespeichersystem arbeitet wie folgt:
Durch den elektrochemischen Energiespeicher, also typischerweise eine Batterie oder ein Akkumulator, wird die Lasteinheit im Lastbetrieb mit einem Batteriestrom versorgt. Das heißt, bei geschlossenem Stromkreis fließt der Batteriestrom ausgehend von dem elektrochemischen Energiespeicher im Lastbetrieb zu der Lasteinheit. Im Generatorbetrieb wird durch die Generatoreinheit der Batteriestrom, mit dem der elektrochemische Energiespeicher geladen wird, erzeugt.

Kommt es zu Stromspitzen, das heißt, hat die Lasteinheit in einem Überlastbetrieb einen erhöhten Stromverbrauch bzw. wird durch die Generatoreinheit im Generatorbetrieb ein höherer Strom erzeugt, als zur Ladung des elektrochemischen Energiespeichers benötigt wird bzw. als dieser insbesondere im Hinblick auf dessen Lebenszeit verträgt, wird ein den maximal durch den elektrochemischen Energiespeicher zur Verfügung gestellten bzw. maximal für den elektrochemischen Energiespeicher zulässigen, maximalen Batteriestrom übersteigender Zusatzstrom durch den aus der Reihenschaltungsanordnung aus den mehreren Doppelschichtkondensatoren ausgebildeten kapazitiven Energiespeicher, der im Folgenden der Einfachheit halber als Superkondensatorstapel bezeichnet ist, bereitgestellt bzw. für dessen Aufladung verwendet. Bei der vorliegenden Erfindung kommt, wenn der Batteriestrom zulässige Werte überschreitet, eine Schaltungsanordnung aus dem Superkondensatorstapel und dem den Gegentaktflusswandler beinhaltenden Energiespeichermodul zum Einsatz.

Die Spannungs- und Stromsteuerungs- und/oder -regeleinheit überwacht die Ströme und Spannungen innerhalb des erfindungsgemäßen hybriden Energiespeichersystems. Werden durch die Spannungs- und Stromsteuerungs- und/oder -regeleinheit den maximalen Batteriestrom übersteigende Stromspitzen erkannt, werden durch die Spannungs- und Stromsteuerungs- und/oder -regeleinheit die Schaltungskomponenten des erfindungsgemäßen hybriden Energiespeichersystems zur Vermeidung einer Schädigung des elektrochemischen Energiespeichers derart gesteuert oder geregelt, dass nur der maximale Batteriestrom zu dem elektrochemischen Energiespeicher fließt und der überschüssige Zusatzstrom in Richtung des Superkondensatorstapels fließt.

Der Superkondensatorstapel ist aus mehreren in Reihe geschalteten Doppelschichtkondensatoren ausgebildet. Doppelschichtkondensatoren bzw. sogenannte Superkondensatoren weisen im Vergleich zu Akkumulatoren bei gleichem Gewicht nur etwa 10 % von deren Energiedichte auf. Allerdings ist die Leistungsdichte von Doppelschichtkondensatoren 10 bis 100 mal so groß wie die von Akkumulatoren. Der Superkondensatorstapel ist zwar ohne Weiteres vollständig aufladbar, aber physikalisch bedingt nicht zu 100 %, sondern typischerweise nur bis zu ca. 80 % entladbar.

Bei dem erfindungsgemäßen hybriden Energiespeichersystem fließt der die Stromspitzen beinhaltende Zusatzstrom ausgehend von der Generatoreinheit bzw. zu der Lasteinheit zunächst durch eine Parallelschaltung aus einerseits dem Glättungskondensator und andererseits dem Übertragertransformator und der Drosselspule, bevor er zu dem Superkondensatorstapel fließt. Es wird also immer zuerst der Glättungskondensator im Lastbetrieb entladen bzw. im Generatorbetrieb aufgeladen, bevor der Superkondensatorstapel im Lastbetrieb entladen bzw. im Generatorbetrieb aufgeladen wird. Da der Glättungskondensator ein einfacher Kondensator ist, ist dessen Entladung bzw. Aufladung schnell und vollständig möglich.

Der Gegentaktflusswandler ist ein Gegentaktflusswandler in Vollbrückensteuerung. Der Gegentaktflusswandler wird durch entsprechende Schaltung der Schalter der Vollbrückenschaltung mittels der Spannungs- und Stromsteuerungs- und/oder -regeleinheit im Gegentakt betrieben. Die Schalter der Vollbrückenschaltung sind beispielsweise MOS-FETs.

Der Gegentaktflusswandler ist ein bidirektionaler DC/DC-Wandler, d. h., er wandelt eine Eingangsgleichspannung, die vorliegend über dem elektrochemischen Energiespeicher anliegt, in eine Ausgangsgleichspannung, die vorliegend über dem Glättungskondensator des Gegentaktflusswandlers anliegt, um und umgekehrt.

Der Übertragertransformator schafft eine galvanische Trennung zwischen einem Primärkreis und einem Sekundärkreis.

Bei einer ersten Schalterstellung der Schalter der Vollbrückenschaltung wird die Primärwicklung des Übertragertransformators des Gegentaktflusswandlers in einer ersten Primärrichtung von Primärstrom durchflossen, wodurch sich über der Primärwicklung ein erstes Magnetfeld aufbaut. Dieses erste Magnetfeld wirkt mittels des Eisenkerns des Übertragertransformators auf die Sekundärwicklung, in der ein in einer ersten Sekundärrichtung fließender Sekundärstrom induziert wird. Bei einer zweiten Schalterstellung der Schalter der Vollbrückenschaltung wird die Primärwicklung des Übertragertransformators des Gegentaktflusswandlers in einer zweiten Primärrichtung von Primärstrom durchflossen, wodurch sich über der Primärwicklung ein zweites Magnetfeld aufbaut. Dieses zweite Magnetfeld wirkt mittels des Eisenkerns des Übertragertransformators auf die Sekundärwicklung, in der ein in einer zweiten Sekundärrichtung fließender Sekundärstrom induziert wird.

Durch das kontinuierliche Wechseln der Schalterstellung der Schalter der Vollbrückenschaltung wird an der Sekundärwicklung eine periodisch wechselnde Rechteckspannung bzw. ein periodisch seine Richtung ändernder Strom erzeugt.

Dieser Strom wird mittels des mit der Sekundärwicklung verbundenen und aus der Drosselspule und dem Glättungskondensator zusammengesetzten LC-Gliedes geglättet, sodass am Ausgang des Gegentaktflusswandlers, d. h. über dem Glättungskondensator, eine Gleichspannung zur Verfügung steht. Das geschieht folgendermaßen:
Das LC-Glied weist in der vorliegenden Erfindung die zwischen die Mittelanzapfung der Sekundärwicklung und den Pluspol der Lasteinheit oder der Generatoreinheit geschaltete Drosselspule und den zwischen den Pluspol des kapazitiven Energiespeicherstapels und den Pluspol der Last- oder Generatoreinheit geschalteten Glättungskondensator auf. Wird an der Sekundärwicklung ein in die erste oder zweite Sekundärrichtung fließender Sekundärstrom induziert, steigt der Spulenstrom, der durch die Drosselspule fließt, allmählich an. Umgekehrt sinkt der Spulenstrom durch die Drosselspule, wenn an der Sekundärwicklung keine Sekundärspannung von der Primärwicklung her induziert wird. Im Ergebnis fließt durch die Drosselspule ein periodischer Strom mit zeitlich dreieckförmigem Verlauf.

Durch die sich ändernde Stromrichtung wird der Glättungskondensator dauerhaft aufgeladen und wieder entladen. Der Glättungskondensator integriert den durch die Drosselspule fließenden Spulenstrom, bildet also einen Mittelwert des Drosselspulenstroms, sodass über dem Glättungskondensator eine Gleichspannung abfällt, die die Ausgangsspannung des Gegentaktflusswandlers bildet. Es findet also eine Stromspitzenglättung statt.

Bei der vorliegenden Erfindung fällt über der Lasteinheit oder der Generatoreinheit jedoch nicht nur die Ausgangsspannung des Gegentaktflusswandlers, sondern die Summe aus der Ausgangsspannung des Gegentaktflusswandlers und der über dem als Superkondensatorstapel ausgebildeten kapazitiven Energiespeicherstapel abfallenden Speicherspannung ab. Die Spannung über der Lasteinheit oder der Generatoreinheit setzt sich also aus der eine gespeicherte Energie darstellenden Grundspannung, die über dem kapazitiven Energiespeicher abfällt, und einer dynamischen Pufferspannung, die über dem Glättungskondensator abfällt, zusammen.

Die in dem kapazitiven Energiespeicherstapel gespeicherte Energie liefert also stets eine Grundspannung zusätzlich zu der Ausgangsspannung des Gegentaktflusswandlers für die Lasteinheit oder die Generatoreinheit. Es muss daher bei der vorliegenden Erfindung im Lastbetrieb lediglich ein Teil des von der Last- oder Generatoreinheit benötigten Energiebedarfs von dem Gegentaktflusswandler zur Verfügung gestellt werden bzw. im Generatorbetrieb lediglich ein Teil der von der Last- oder Generatoreinheit generierten Energie von dem Glättungskondensator des Gegentaktflusswandlers aufgenommen werden. Die Auslegung des Gegentaktflusswandlers kann daher sehr effizient gestaltet werden.

Auch wenn sich der Superkondensatorstapel in der Praxis nie zu 100 % entlädt, liegt bei der vorliegenden Erfindung der ökonomische Nutzen dieses Bauteils bei 100 %. Das heißt, die Restenergie des Superkondensatorstapels kann selbst bei weiter Entladung des Superkondensatorstapels zusätzlich zu der durch den Gegentaktflusswandler erzeugten Ausgangsspannung genutzt werden.

In Folge der speziellen Schaltungsanordnung können bei der vorliegenden Erfindung der elektrochemische Energiespeicher nicht nur durch gezielte Spitzenglättung in seinem "Wohlfühlbereich" betrieben, sondern auch die Stromanstiege gedämpft werden. Daraus resultiert eine signifikant höhere Lebensdauer des elektrochemischen Energiespeichers bei einer kostenoptimalen Ausnutzung der unterstützenden Doppelschichtkondensatoren.

Um eine geeignete Zusatz-Energieversorgung der Lasteinheit oder eine geeignete Zusatz-Speichermöglichkeit für die Generatoreinheit durch den Superkondensatorstapel zur Verfügung stellen zu können, sollte dieser in der Praxis mindestens zur Hälfte oder gar mindestens zu Dreiviertel seiner Gesamtkapazität aufgeladen sein. Insbesondere dann, wenn Rückspeisungen durch die Lasteinheit oder die Generatoreinheit erwartet werden können, sollte der Superkondensatorstapel jedenfalls zu Beginn seines Einsatzes nicht zu 100 % aufgeladen sein.

In einer vorteilhaften Ausführungsform des erfindungsgemäßen hybriden elektrischen Energiespeichersystems weist dieses einen zwischen den Pluspol des elektrochemischen Energiespeichers und den Pluspol des kapazitiven Energiespeicherstapels geschalteten Tiefsetzsteller auf.

Durch den optional bei dem erfindungsgemäßen hybriden elektrischen Energiespeichersystem einsetzbaren, in Reihe zwischen die Lasteinheit oder die Generatoreinheit und den Superkondensatorstapel geschalteten Bypass-Tiefsetzsteller wird die Dynamik der Spannungs- und Stromsteuerungs- und/oder -regeleinheit des Energiespeichersystems insbesondere bei Rückspeisung von Energie aus der Lasteinheit oder der Generatoreinheit in den Superkondensatorstapel erhöht.

Die oben beschriebene Rückspeisung könnte beispielsweise vorgenommen werden, wenn die Lasteinheit ein Fahrzeug ist, an dem eine Vollbremsung durchgeführt wird, wo also in sehr kurzer Zeit eine hohe Energie erzeugt wird, die rückgespeist werden kann, wodurch die eigentliche Lasteinheit als Generatoreinheit wirkt. Bei einer solchen Vollbremsung kann die Spannungs- und Stromsteuerungs- und/oder -regeleinheit des Energiespeichersystems durch Umschaltung von einer positiven Stellgröße auf eine negative Stellgröße den Gegentaktflusswandler nicht sofort von Treiben auf Senke umschalten. Vielmehr braucht es hierfür eine endliche Zeit, wobei das erforderliche Zeitintervall lastabhängig ist.

Dagegen kann der Tiefsetzsteller sofort beim Bremsvorgang einsetzen. Das heißt, in der Zeit, in der der Gegentaktflusswandler noch nicht bzw. noch nicht vollständig von Treiben in Senke umgeschaltet ist, fließt der von der als Generatoreinheit wirkenden Lasteinheit rückgespeiste Strom in den Tiefsetzsteller, durch den wiederum der Superkondensatorstapel vorgeladen wird. Dabei wird durch den Tiefsetzsteller der Strom herabgesetzt, der in den eine niederohmige Last darstellenden Superkondensatorstapel fließt. Dadurch wird der Zeitraum, in dem der Gegentaktflusswandler von Treiben auf Senke umschalten muss, überbrückt.

Der Tiefsetzsteller kommt vorzugsweise nur dann zum Einsatz, wenn durch die Lasteinheit keine Energie gefordert wird bzw. wenn durch die als Generatoreinheit wirkende Lasteinheit, wie bei abrupten Bremsvorgängen, Energie erzeugt wird. Im Normallastbetrieb fließt typischerweise kein Strom durch den Tiefsetzsteller.

Indem bei dem erfindungsgemäßen hybriden Energiespeichersystem der Tiefsetzsteller zum Einsatz kommt, kann das Energiespeichersystem effizient von Speisebetrieb auf Rückspeisebetrieb und umgekehrt umgestellt werden, wobei es hohen stromdynamischen Anforderungen standhält.

In manchen Anwendungen der Erfindung ist es von Vorteil, wenn das Energiespeichermodul parallel zu einem DC-AC-Wandler geschaltet ist. Durch den DC-AC-Wandler kann die Ausgangsspannung des Gegentaktflusswandlers, die eine Gleichspannung ist, in eine Wechselspannung umgewandelt werden, um die Lasteinheit oder die Generatoreinheit mit Wechselspannung betreiben zu können.

Ausführungsformen der vorliegenden Erfindung, deren Aufbau Funktion und Vorteile werden im Folgenden anhand von Figuren näher erläutert, wobei
- Figur 1: schematisch eine Ausführungsform eines erfindungsgemäßen hybriden Energiespeichersystems mit einem Tiefsetzsteller anhand einer Schaltungsanordnung zeigt;
- Figur 2: einen Gegentaktflusswandler des erfindungsgemäßen hybriden Energie-speichersystems als Schaltungsanordnung und als entsprechendes Schaltzeichen zeigt;
- Figur 3: schematisch einen Schaltungsaufbau des in der Ausführungsform der Figuren 1 und 5 verwendeten Tiefsetzstellers zeigt;
- Figur 4: schematisch eine Ausführungsform eines erfindungsgemäßen hybriden Energiespeichersystems anhand einer vereinfachten Schaltungsdarstellung zeigt;
- Figur 5: schematisch das erfindungsgemäße hybride Energiespeichersystem aus Figur 1 in vereinfachter Schaltungsdarstellung zeigt;
- Figur 6: schematisch eine Ausführungsform eines erfindungsgemäßen hybriden Energiespeichersystems mit DC-AC-Wandler anhand einer vereinfachten Schaltungsdarstellung zeigt; und
- Figur 7: schematisch eine Ausführungsform eines erfindungsgemäßen hybriden Energiespeichersystems mit Tiefsetzsteller und DC-AC-Wandler anhand einer vereinfachten Schaltungsdarstellung zeigt.

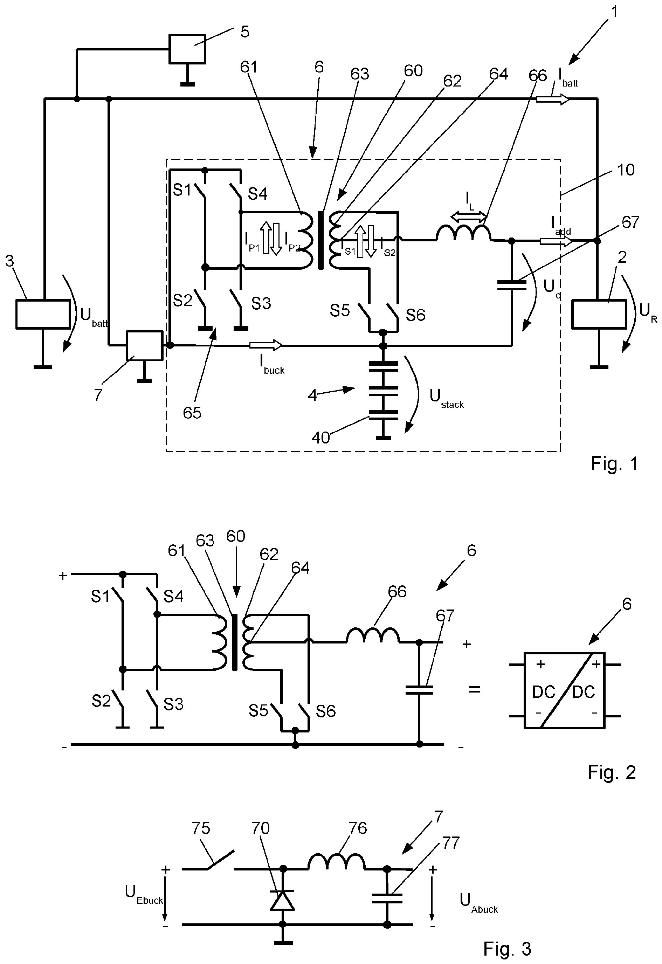

Die Figuren 1, 4, 5, 6 und 7 zeigen schematisch Ausführungsformen von erfindungsgemäßen hybriden Energiespeichersystemen 1, 1', 1", 1‴ anhand entsprechender Schaltungsanordnungen.

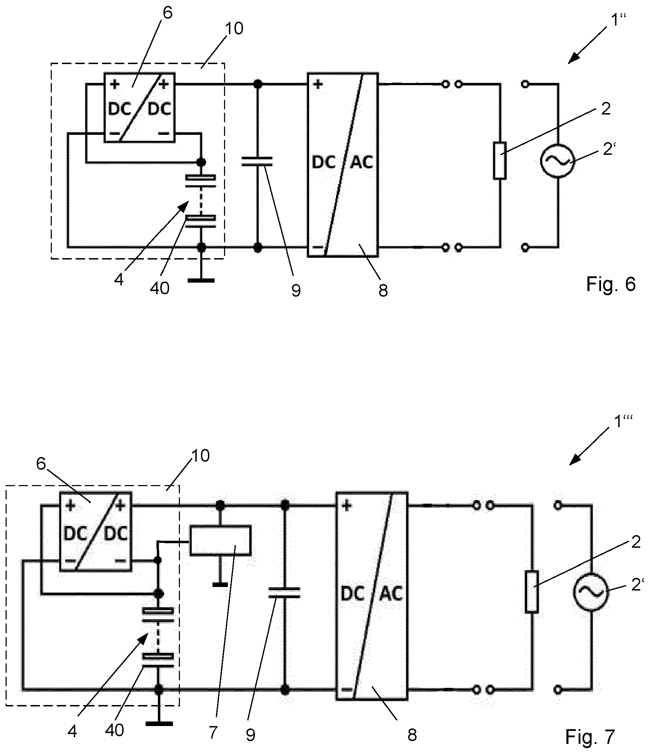

Die Energiespeichersysteme 1, 1', 1", 1‴ weisen jeweils eine Lasteinheit 2 oder eine Generatoreinheit 2' auf. Diese kann, wie in den Figuren 1, 4 und 5 gezeigt, Gleichspannung benötigen oder Gleichspannung erzeugen oder, wie in den Figuren 6 und 7 beispielhaft gezeigt, mit Wechselspannung betrieben sein oder Wechselspannung erzeugen.

Die Energiespeichersysteme 1, 1', 1", 1‴ weisen ferner jeweils einen mit der Lasteinheit 2 oder der Generatoreinheit 2' elektrisch verbundenen elektrochemischen Energiespeieher 3 auf, durch den die Lasteinheit 2 im Lastbetrieb des jeweiligen Energiespeichersystems 1, 1', 1" mit einem Batteriestrom I_{batt} versorgt wird bzw. der im Generatorbetrieb durch die Generatoreinheit 2' mit einem zu dem Batteriestrom I_{batt} entgegengesetzt gepolten Generatorstrom geladen wird. Über dem elektrochemischen Energiespeicher 3 fällt eine Batteriespannung U_{batt} ab.

Die Energiespeichersysteme 1, 1', 1", 1‴ weisen zudem jeweils einen kapazitiven Energiespeicherstapel 4 auf. Der kapazitive Energiespeicherstapel 4 ist jeweils aus einer Mehrzahl von in Reihe geschalteten elektrischen Doppelschichtkondensatoren 40 aufgebaut. Der kapazitive Energiespeicherstapel 4 wird vorliegend auch als Superkondensatorstapel bezeichnet. Über dem kapazitiven Energiespeicherstapel 4 fällt eine Speicherspannung U_{stack} ab. Die Speicherspannung U_{stack} bewegt sich typischerweise in einem Bereich von 9 bis 48 V.

Der kapazitive Energiespeicherstapel 4 ist aus physikalischen Gründen nicht zu 100 % entladbar, typischerweise verbleibt in ihm immer mindestens ca. 20 % der maximal von ihm speicherbaren Energie, sodass immer zumindest eine Grundspannung über ihm abfällt.

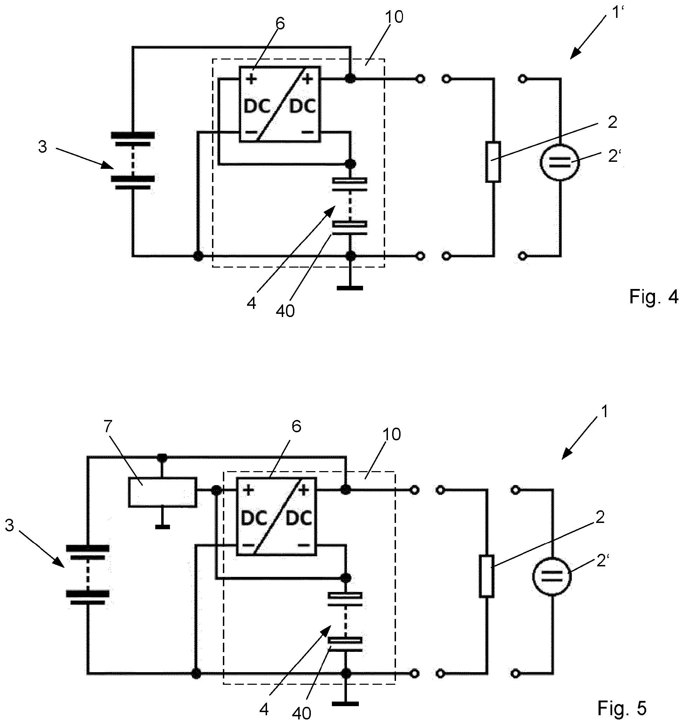

Die Energiespeichersysteme 1, 1', 1", 1‴ weisen außerdem ein Energiespeichermodul 10 mit einer Leistungselektronik und einem Gegentaktflusswandler 6 auf. Der Gegentaktflusswandler 6 ist, wie es auch schematisch in den Figuren 4 bis 7 dargestellt ist, ein DC-DC-Wandler.

Im Gegensatz zu der Druckschrift DE 10 2016 122 383 A1, bei welcher ein Doppelschichtkondensatorstack parallel zur Sekundärseite eines DC-DC-Wandlers geschaltet ist, ist bei dem erfindungsgemäßen hybriden Energiespeichersystem 1, 1', 1", 1‴ eine Sekundärseite des Gegentaktflusswandlers 6 in Reihe zu dem kapazitiven Energiespeicherstapel 4 geschaltet.

Der Gegentaktflusswandler 6 weist einen Übertragertransformator 60 mit einer Primärwicklung 61, einer Sekundärwicklung 62 und einem Eisenkern 63 auf. Darüber hinaus weist der Gegentaktflusswandler 6 ein LC-Glied mit einer Drosselspule 66 und einem Glättungskondensator 67 auf.

Die Drosselspule 66 ist mit einer Mittelanzapfung 64 der Sekundärwicklung 62 verbunden.

Die Leistungselektronik weist eine aus Schaltern S1, S2, S3, S4 zusammengesetzte Vollbrückenschaltung 65 auf, die mit den Wicklungsenden der Primärwicklung 61 verbunden ist.

Über dem Glättungskondensator 67 fällt die Ausgangsspannung des Gegentaktflusswandlers 6 ab, die vorliegend auch als Pufferspannung U_{C} bezeichnet wird.

Der Glättungskondensator 67 ist zwischen den Pluspol der Lasteinheit 2 oder der Generatoreinheit 2' und den Pluspol des kapazitiven Energiespeicherstapels 4 geschaltet. Die über der Lasteinheit 2 oder der Generatoreinheit 2' abfallende Spannung U_{R} setzt sich somit aus der Summe aus der Pufferspannung U_{C} und der Speicherspannung U_{stack} zusammen.

Der Minuspol des kapazitiven Energiespeicherstapels 4 liegt auf Masse.

Der Pluspol des kapazitiven Energiespeicherstapels 4 ist abwechselnd mit einem Pluspol am Eingang des Gegentaktflusswandlers 6 bzw. mit einem Minuspol am Ausgang des Gegentaktflusswandlers 6 verbunden. Der Gegentaktflusswandler 6 weist hierfür zwischen die Wicklungsenden der Sekundärwicklung 62 und den Pluspol des kapazitiven Energiespeichers geschaltete Schalter S5, S6 auf. Somit weist also der Gegentaktflusswandler 6 - im Gegensatz zu dem beispielsweise in der Druckschrift DE 10 2015 220 820 A1 beschriebenen, nicht rückspeisefähigen DC-DC-Wandler, der lediglich passive Dioden auf seiner Sekundärseite aufweist - auf seiner Sekundärseite aktiv gesteuerte Schalter S5, S6 auf.

Der Minuspol des Eingangs des Gegentaktflusswandlers 6 liegt auf Masse.

Der Pluspol des Ausgangs des Gegentaktflusswandlers 6 ist mit dem Pluspol des elektrochemischen Energiespeichers 3 verbunden.

Das in den Figuren 1 und 5 dargestellte Energiespeichersystem 1 und damit vom Grundsatz her auch die in den Figuren 4, 6 und 7 dargestellten Energiespeichersysteme 1', 1", 1‴ arbeiten wie folgt:
Wird durch die Spannungs- und Stromsteuerungs- und/oder -regeleinheit 5 erkannt, dass ein einen zulässigen Maximalwert I_{battmax} um einen Strom I_{add} übersteigender Strom zur Versorgung der Lasteinheit 2 nötig ist oder von der Generatoreinheit 2' generiert wird, wird durch die Spannungs- und Stromsteuerungs- und/oder -regeleinheit 5 der Gegentaktflusswandler 6 eingeschaltet. Dabei werden wechselweise entweder die Schalter S1 und S3 der Vollbrückenschaltung 65 oder die Schalter S2 und S4 der Vollbrückenschaltung 65 eingeschaltet.

Dadurch kann über den kapazitiven Energiespeicherstapel 4 darin gespeicherte Energie dem Gegentaktflusswandler 6 im Gegentakt zugeführt werden.

Sind die Schalter S1 und S3 geschlossen und die Schalter S2 und S4 geöffnet, fließt durch die Primärwicklung 61 des Gegentaktflusswandlers 6 ein erster Primärstrom I_{P1} in einer ersten Primärrichtung. Es baut sich ein erstes Magnetfeld über der Primärwicklung 61 auf. Dieses induziert mittels des Eisenkerns 63 des Übertragertransformators 60 in der Sekundärwicklung 62 einen ersten Sekundärstrom I_{S1}, der in eine erste Sekundärrichtung fließt. Wenn die Schalter S2 und S4 geschlossen und die Schalter S1 und S3 geöffnet sind, fließt durch die Primärwicklung 61 des Gegentaktflusswandlers 6 ein zweiter Primärstrom I_{P2} in einer zweiten Primärrichtung, die der ersten Primärrichtung entgegengesetzt ist. Es baut sich ein zweites Magnetfeld über der Primärwicklung 61 auf. Dieses induziert mittels des Eisenkerns 63 des Übertragertransformators 60 in der Sekundärwicklung 62 einen zweiten Sekundärstrom I_{S2}, der in eine der ersten Sekundärrichtung entgegengesetzte, zweite Sekundärrichtung fließt.

Wenn die Schalter S1 und S3 geschlossen sind, dann ist synchron dazu der Schalter S5 geschlossen und der Schalter S6 geöffnet. Wenn die Schalter S2 und S4 geschlossen sind, dann ist synchron dazu der Schalter S6 geschlossen und der Schalter S5 geöffnet. Wenn der erste Sekundärstrom I_{S1} fließt, ist synchron dazu der Schalter S5 geschlossen. Wenn der zweite Sekundärstrom I_{S2} fließt, ist synchron dazu der Schalter S6 geschlossen.

Die Schalter S5 und S6 sind nie gleichzeitig geschlossen.

Der immer wieder seine Richtung ändernde Sekundärstrom I_{S} fließt in die Drosselspule 66, in der der Strom allmählich ansteigt und entsprechend allmählich absinkt. Im Ergebnis fließt durch die Drosselspule 66 ein periodischer Drosselspulenstrom I_{L} mit zeitlich dreieckförmigem Verlauf.

Durch die sich ändernden Stromanstiege des Drosselspulenstroms I_{L} wird der Glättungskondensator 67 dauerhaft aufgeladen und wieder entladen. Der Glättungskondensator 67 integriert den durch die Drosselspule 66 fließenden Drosselspulenstrom I_{L}, bildet also einen Mittelwert des Drosselspulenstroms I_{L}, sodass über dem Glättungskondensator 67 eine Gleichspannung abfällt, die die Ausgangsspannung des Gegentaktflusswandlers 6 und gleichzeitig eine Pufferspannung U_{C} des jeweiligen Energiespeichersystems 1, 1', 1" bildet.

Über der Lasteinheit 2 oder der Generatoreinheit 2' fällt die Summe aus der über dem Glättungskondensator 67 abfallenden, dynamischen Pufferspannung U_{C} und der über dem kapazitiven Energiespeicherstapel abfallenden Speicherspannung U_{stack} ab. Die Speicherspannung U_{stack} bildet stets eine Grundspannung für die Versorgung der Lasteinheit 2 oder der Generatoreinheit 2'. Es muss also bei dem jeweiligen erfindungsgemäßen hybriden Energiespeichersystem 1, 1', 1", 1‴ durch den Gegentaktflusswandler 6 nicht die volle Versorgungsspannung für die Lasteinheit 2, sondern nur ein eine Grundspannung übersteigender Zusatzbetrag an Spannung für die Versorgung der Lasteinheit 2 bereitgestellt werden. Gleiches gilt analog für die durch die Generatoreinheit 2' erzeugte Versorgungsspannung, bei der durch den Gegentaktflusswandler 6 nur ein die Grundspannung übersteigender Zusatzbetrag an Spannung aufgenommen wird. Die durch den kapazitiven Energiespeicherstapel 4 bereitgestellte Speicherspannung U_{stack} wird in jedem Fall zu 100 % genutzt.

Bei den in den Figuren 1, 5 und 7 dargestellten Ausführungsformen weist das jeweils gezeigte hybride Energiespeichersystem 1, 1‴ einen Tiefsetzsteller 7 auf, der bei dem hybriden Energiespeichersystem 1 zwischen den Pluspol des elektrochemischen Energiespeichers 3 und den Pluspol des Eingangs des Gegentaktflusswandlers 6 geschaltet ist und bei dem hybriden Energiespeichersystem 1‴ zwischen den Pluspol des Ausgangs des Gegentaktflusswandlers 6 und den Pluspol des kapazitiven Energiespeicherstapels 4 geschaltet ist. Wie es in Figur 3 schematisch gezeigt ist, wandelt der jeweilige Tiefsetzsteller 7 eine hohe Eingangsspannung U_{Ebuck} in eine niedrigere Ausgangsspannung U_{Abuck} mit Hilfe einer Stromregelung in einen geregelten Ausgangsstrom um, der in Figur 1 mit I_{buck} gekennzeichnet ist.

Der Tiefsetzsteller 7 ist typischerweise so aufgebaut, wie es vereinfacht in Figur 3 dargestellt ist. Das heißt, der Tiefsetzsteller 7 weist ein LC-Glied mit einer Tiefsetzstellerspule 76 und einem Tiefsetzstellerkondensator 77, über dem die Ausgangsspannung U_{Abuck} des Tiefsetzsteller 7 abfällt, eine parallel zu dem Tiefsetzstellerkondensator 77 geschaltete Diode 70 und einen Schalter 75 auf.

Der Schalter 75, der beispielsweise ein Transistor ist, wird dann, wenn durch die in Figur 1 beispielhaft gezeigte Spannungs- und Stromsteuerungs- und/oder -regeleinheit 5 des hybriden Energiespeichersystems 1 z. B. ein durch die Lasteinheit 2 oder die Generatoreinheit 2' abrupt erzeugter hoher Rückspeisestrom erkannt wird, abwechselnd ein- und ausgeschaltet. Während der Einschaltzeit fließt der Rückspeisestrom durch die Tiefsetzstellerspule 76, die Diode 70 sperrt. Durch die Verzögerungswirkung der Tiefsetzstellerspule 76 fließt durch diese ein Strom mit dreieckförmigem Signalverlauf. Ist der Schalter 75 ausgeschaltet, wird die in der Tiefsetzstellerspule 76 gespeicherte Energie abgebaut. Der Strom fließt nun ausgehend von dem Tiefsetzstellerkondensator 77 durch die Diode 70.

Die Tiefsetzstellerspule 76 hält die höhere Eingangsspannung U_{Ebuck} von dem kapazitiven Energiespeicherstapel 4 fern. Die sich über dem Tiefsetzstellerkondensator 77 bei Einschaltung des Schalters 75 aufbauende Ausgangsspannung U_{Abuck} fällt auch über dem parallel zu dem Tiefsetzstellerkondensator 77 geschalteten kapazitiven Energiespeicherstapel 4 ab und kann damit zu dessen Aufladung genutzt werden.

Der Tiefsetzsteller 7 kann, wie es anhand der in Figur 4 schematisch dargestellten Ausführungsform des hybriden Energiespeichersystems 1' gezeigt ist, auch weggelassen werden.

In den in den Figuren 6 und 7 gezeigten Ausführungsformen des erfindungsgemäßen hybriden Energiespeichersystems 1", 1‴ weist dieses zusätzlich zu den weiter oben aufgeführten Komponenten parallel zu der Schaltungsanordnung aus dem Gegentaktflusswandler 6 und dem kapazitiven Energiespeicherstapel 4 eine Parallelschaltung aus einem DC-AC-Wandler 8 und einem Zwischenkreiskondensator 9 auf. Durch diese Anordnung kann die Gleichspannung, die durch die Schaltungsanordnung aus dem Gegentaktflusswandler 6 und dem kapazitiven Energiespeicherstapel 4 erzeugt wird, in eine Wechselspannung zur Versorgung einer Wechselspannung benötigenden Lasteinheit 2 umgewandelt werden. Genauso kann eine von der Generatoreinheit 2' erzeugte Wechselspannung durch den dann als AC-DC-Wandler wirkenden DC-AC-Wandler 8 in eine Gleichspannung umgewandelt werden, sodass die entsprechende Energie in dem kapazitiven Energiespeicherstapel 4 gespeichert werden kann.

## Patentansprüche

1. Hybrides elektrisches Energiespeichersystem (1, 1', 1", 1‴) mit einer Lasteinheit (2) oder einer Generatoreinheit (2'), einem elektrochemischen Energiespeicher (3), dessen Pluspol mit der Lasteinheit (2) oder der Generatoreinheit (2') verbunden ist, einem kapazitiven Energiespeicherstapel (4) und einer Spannungs- und Stromsteuerungs- und/oder -regeleinheit (5), **dadurch gekennzeichnet, dass** das hybride elektrische Energiespeichersystem (1, 1', 1", 1‴) ein aus dem kapazitiven Energiespeicherstapel (4) und einer Leistungselektronik bestehendes Energiespeichermodul (10) aufweist, wobei der kapazitive Energiespeicherstapel (4) eine Reihenschaltungsanordnung aus mehreren elektrischen Doppelschichtkondensatoren (40) ist und die Leistungselektronik eine Vollbrückenschaltung (65) und einen Gegentaktflusswandler (6) mit einem Übertragertransformator (60) mit einer mittig geteilten Sekundärwicklung (62) aufweist, wobei eine einzige Primärwicklung (61) des Übertragertransformators (60) im Gegentakt über Schalter (S1, S4; S2, S3) der Vollbrückenschaltung (65) mit dem Pluspol des kapazitiven Energiespeicherstapels (4) und mit Masse verbunden ist, und wobei eine Mittelanzapfung (64) der Sekundärwicklung (62) des Gegentaktflusswandlers (6) über eine Drosselspule (66) des Gegentaktflusswandlers (6) mit dem Pluspol der Lasteinheit (2) oder der Generatoreinheit (2') verbunden ist, der Pluspol des kapazitiven Energiespeicherstapels (4) im Gegentakt mit den Wicklungsenden der Sekundärwicklung (62) des Übertragertransformators (60) verbunden ist und zwischen den Pluspol der Lasteinheit (2) oder der Generatoreinheit (2') und den Pluspol des kapazitiven Energiespeicherstapels (4) ein Glättungskondensator (67) des Gegentaktflusswandlers (6) geschaltet ist.

2. Hybrides elektrisches Energiespeichersystem nach Anspruch 1, **dadurch gekennzeichnet, dass** das Energiespeichersystem (1, 1‴) einen zwischen den Pluspol des elektrochemischen Energiespeichers (2) und den Pluspol des kapazitiven Energiespeicherstapels (4) geschalteten Tiefsetzsteller (7) aufweist.

3. Hybrides elektrisches Energiespeichersystem nach Anspruch 1 oder 2, **dadurch gekennzeichnet, dass** das Energiespeichermodul (10) parallel zu einem DC-AC-Wandler (8) geschaltet ist.
